(19) Europäisches Patentamt
European Patent Office
Office européen des brevets

(11) EP 1 048 422 A2

(12) **EUROPEAN PATENT APPLICATION**

(43) Date of publication:
**02.11.2000 Bulletin 2000/44**

(51) Int. Cl.[7]: **B27K 3/15**, B27K 5/06

(21) Application number: **00302824.8**

(22) Date of filing: **04.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.04.1999 US 130065 P**

(71) Applicant: **ROHM AND HAAS COMPANY**
**Philadelphia, Pennsylvania 19106-2399 (US)**

(72) Inventors:
- **Yu, Bing**
  **Ambler, Pennsylvania 19002 (US)**
- **Lau, Willie**
  **Ambler, Pennsylvania 19002 (US)**

(74) Representative:
**Buckley, Guy Julian**
**ROHM AND HAAS (UK) LTD.**
**European Operations Patent Department**
**Lennig House**
**2 Mason's Avenue**
**Croydon CR9 3NB (GB)**

(54) **Compositions for the treatment of wood**

(57) The invention relates to compositions for reducing the swelling of wood in the presence of water, comprising: one or more polymers comprising, as polymerized units,

i) 55-99.9% by weight of the total polymer of one or more (meth) acrylic acid ester monomers having the formula:

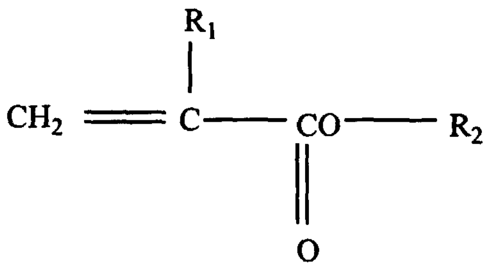

**(I)**

wherein $R_1$ = hydrogen or a methyl group; and $R_2$ = an alkyl or alkenyl group containing at least 12 carbon atoms; and
ii) 0.1-45% by weight of the total polymer of one or more monomers copolymerizable with (I).

The invention also relates to a method of reducing the rate at which biocide leaches from wood.

EP 1 048 422 A2

## Description

The present invention relates to compositions for the treatment of wood. In particular, the present invention is directed to compositions which improve anti-swelling properties of wood when in contact with water, and which thereby improve the weather resistance of wood.

Hereafter, the terms "wood" and "wood substrate" shall be construed to include all forms of wood, eg. solid wood, wood composite materials, eg. wood fibre board, chip board, particle board, and all products made from wood and wood-composite materials, eg. mill frames, decking, siding, siding cladding, roof shingles and utility poles.

It is well known that when wood absorbs and releases moisture it swells and contracts; this causes the wood to warp and split and to decrease in strength. It is widely understood that the reason for this is that when moisture is absorbed into wood, the moisture near the surface evaporates first, while high moisture is still present in the middle of the wood. This creates stress at the interface between the dry shrunken wood and the wet expanded wood, and this stress causes warping and splitting. The problem is particularly acute near the end grain of the wood where moisture moves in the direction of the wood fibres at a very high rate and this results in the commonly observed end grain splitting of boards.

There is common agreement between those skilled in the art, that unless water flow through the available flow paths, for example, the lumens (cavities), pits and void spaces, is restricted in some way, it is impossible to prevent the expansion and contraction which leads to warping and splitting of the wood. The known approach to overcome this problem is to render the wood dimensionally stable by achieving what is called "bulking" of the cell lumens, using a water repellent agent. By "bulking", we mean that the cell lumens are filled with the water repellent agent. Many water repellent agents have been tried. For example, monomers such as methyl methacrylate, styrene, 2-hydroxyethyl acrylate, polyoxy alkylene glycol (meth) acrylate etc. have been impregnated into wood and then polymerised. However, it is reported, for example in a discussion of the prior art given in Japanese Patent document Sho 62-184803, that unless the amount of polymer in the wood (polymer retention) is at least 40-90% by weight of the wood, then the dimensional stability of the wood will not be adequately improved. The disadvantage with this approach is that it is very costly to achieve such high polymer retention rates. In an attempt to overcome the high retention rate problem, this Japanese Patent document teaches a method to improve the dimensional stability of wood by impregnating the wood with (meth)acrylic acid esters of the formula:

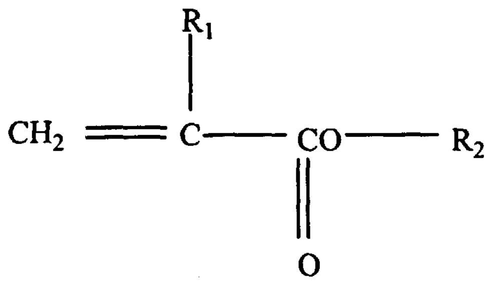

(I)

**[$R_1$ = hydrogen or methyl group, $R_2$ = alkyl or alkenyl group with 4 to 30 carbon atoms]**

in the form of a homopolymer or a copolymer with a copolmerizable monomer such as methyl(meth)acrylate, ethyl (meth)acrylate or other (meth) acrylic acid esters having an alkyl group with 1-4 carbon atoms. This prior art document teaches the use of 20% by weight or more of methyl methacrylic acid ester and specifically discloses that a polymer comprising 250 parts of stearyl methacrylate and 250 parts of methyl methacrylate gives good resistance to water absorption and anti-swelling effects. However, it is apparently the case, according to a second document Japanese patent document SHO 62-152802, that although it is preferable for the polymer to comprise (meth) acrylic acid esters in at least 10% by weight of the total monomer content to ensure that adequate dimensional stability is obtained, the dimensional stability reaches an equilibrium when the amount of (meth) acrylic acid esters is 20-30% by weight of the total monomer content. In addition, in both of these prior art documents, the polymer retention rate is disclosed as 1 to 35%, and is preferably and exemplified to be 5 to 30% by weight. These polymer retention rates, although lower than those disclosed in the older prior art, are nevertheless sufficient to have an adverse effect the commercial viability of such treated wood. Thus, the aim of the present invention is to provide compositions which are highly effective at providing a reduction in the swelling of wood on contact with water and which provide this benefit at an extremely low polymer retention rate. It is also preferable that the compositions of the present invention provide good reduction in the swelling of wood when the compositions are applied to the wood using simple application techniques, for example, using spraying, painting and dipping techniques as well as using wood impregnation techniques which need specialist equipment

and skilled operators. It is also the aim of the present invention that the compositions provided do not interfere with or hinder the activity of other agents used in the treatment of wood, for example biocidal agents which prevent microbial attack of the wood and thereby prevent wood rot or the growth of mould.

Accordingly, the present invention provides compositions for reducing the swelling of wood in the presence of water, comprising:
one or more polymers comprising, as polymerized units,

i) 55-99.9% by weight of the total polymer of one or more (meth) acrylic acid ester monomers having the formula:

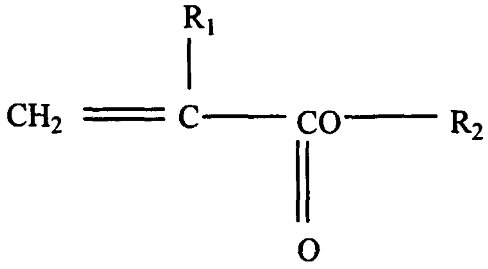

(I)

wherein $R_1$ = hydrogen or a methyl group; and $R_2$ = an alkyl or alkenyl group containing at least 12 carbon atoms, and
ii) 0.1-45% by weight of the total polymer of one or more monomers copolymerizable with (I).

It is particularly advantageous for the polymer to comprise, as polymerized units,

i) 80-99.9% by weight of the total polymer of one or more (meth)acrylic acid ester monomers having the formula:

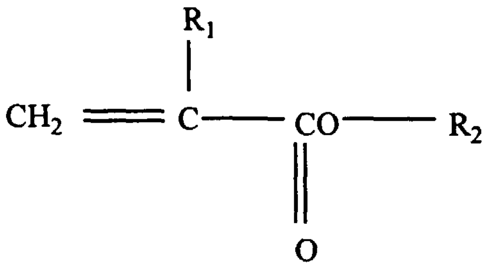

(I)

wherein $R_1$ = hydrogen or a methyl group; and $R_2$ = an alkyl or alkenyl group containing at least 12 carbon atoms, and
ii) 0.1-20% by weight of the total polymer of one or more monomers copolymerizable with (I).

The polymer used in the composition of the present invention may be formed by polymerising the one or more (meth)acrylic acid ester monomers and copolymerisable monomers either before or after treating the wood with said composition. Polymerisation after treating the wood with the compositions is conveniently effected using thermal or UV catalysis.

It is preferred that the alkyl ester of (meth)acrylic acid be a $C_{12}$ to $C_{30}$ alkyl ester of (meth)acrylic acid. It is more preferred that the alkyl ester of (meth)acrylic acid be a $C_{12}$ to $C_{18}$ alkyl ester of (meth)acrylic acid. Suitable alkyl esters of (meth)acrylic acid include, but are not limited to lauryl (meth)acrylate, cetyl (meth)acrylate, stearyl (meth)acrylate, behenyl (meth)acrylate, and eicosyl (meth)acrylate. Beneficial properties may be obtained by utilizing more than one $C_{12}$ to $C_{40}$ alkyl ester of (meth)acrylic acid.

Preferred copolymerisable monomers include at least one ethylenically unsaturated monomer and suitable ethylenically unsaturated monomers for use in the preparation of the polymer compositions of this invention include, but are not limited to (meth)acrylic ester monomers including methyl acrylate, ethyl acrylate, butyl acrylate, 2-ethylhexyl acrylate, decyl acrylate, methyl methacrylate, butyl methacrylate, hydroxyethyl methacrylate, and hydroxypropyl acrylate; acrylamide or substituted acrylamides; styrene or substituted styrene; vinyl acetate or other vinyl esters; vinyl monomers such as vinyl chloride, vinylidene chloride, N-vinyl pyrolidone; and acrylonitrile or methacrylonitrile. Butyl acrylate (BA), methyl methacrylate (MMA), and styrene (STY) are preferred.

The polymer used in this invention may also contain as polymerized units from 0 to 15 parts by weight, preferably 1 to 10 parts by weight, more preferably 1 to 5 parts by weight ethylenically unsaturated acid containing monomer or salts thereof, for example, acrylic acid, methacrylic acid, crotonic acid, phosphoethyl methacrylate, 2-acrylamido-2-methyl-1-propanesulfonic acid, sodium vinyl sulfonate, itaconic acid, fumaric acid, maleic acid, monomethyl itaconate, monomethyl fumarate, monobutyl fumarate, and maleic anhydride. Acrylic acid and methacrylic acid are preferred. Methacrylic acid is more preferred.

The polymer used in this invention may also contain as polymerized units from 0 to 80 parts by weight, preferably 0 to 50 parts by weight, more preferably 1 to 15 parts by weight of a monomer selected from $C_6$-$C_{20}$ alkyl styrene and alkyl-alpha-methyl styrene, $C_6$-$C_{20}$ alkyl dialkyl itaconate, $C_{10}$-$C_{20}$ vinyl esters of carboxylic acids, $C_8$-$C_{20}$ N-alkyl acrylamide and methacrylamide, $C_{10}$-$C_{20}$ alkyl alpha-hydroxymethylacrylate, $C_8$-$C_{20}$ dialkyl 2,2'-(oxydimethylene) diacrylate, $C_8$-$C_{20}$ dialkyl 2,2'-(alkyliminodimethylene)diacrylate, $C_8$-$C_{20}$ N-alkylacrylimide, and $C_{10}$-$C_{20}$ alkyl vinylether.

The polymer used in this invention may also contain as polymerized units from 0.1 to 10 parts by weight, preferably 0.1 to 5 parts by weight, more preferably 0.1 to 3 parts by weight, based on the polymer weight of a cross-linker selected from a cross-linking agent and a cross-linking monomer. By cross-linker is meant a compound which has at least 2 reactive groups which will react with acid groups found on the monomers of the compositions of this invention. Cross-linking agents useful in this invention include a polyaziridine, polyisocyanate, polycarbodiimide, polyamine, and a polyvalent metal. The cross-linking agent is optional, and may be added after polymerization has been completed.

Cross-linking monomers are cross-linkers which are incorporated with the monomers of the compositions of this invention during polymerization. Cross-linking monomers useful in this invention include acetoacetate-functional monomers such as acetoacetoxyethyl acrylate, acetoacetoxypropyl methacrylate, acetoacetoxyethyl methacrylate, allyl acetoacetate, acetoacetoxybutyl methacrylate, and 2,3-di(acetoacetoxy)propyl methacrylate; divinyl benzene, (meth)acryloyl polyesters of polyhydroxylated compounds, divinyl esters of polycarboxylic acids, diallyl esters of polycarboxylic acids, diallyl dimethyl ammonium chloride, triallyl terephthalate, methylene his acrylamide, diallyl maleate, diallyl fumarate, hexamethylene his maleamide, triallyl phosphate, trivinyl trimellitate, divinyl adipate, glyceryl trimethacrylate, diallyl succinate, divinyl ether, the divinyl ethers of ethylene glycol or diethylene glycol diacrylate, polyethylene glycol diacrylates or methacrylates, 1,6-hexanediol diacrylate, pentaerythritol triacrylate or tetraacrylate, neopentyl glycol diacrylate, allyl methacrylate, cyclopentadiene diacrylate, the butylene glycol diacrylates or dimethacrylates, trimethylolpropane di- or tri-acrylates, (meth)acrylamide, n-methylol (meth)acrylamide, mixtures thereof, and the like. (Meth)acrylamide, n-methylol (meth)acrylamide, and mixtures thereof are preferred. The amount of cross-linker utilized is chosen such that the cross-linker does not interfere with film formation.

Chain transfer agents may be used to control the molecular weight of the polymer used in this invention. Suitable chain transfer agents include mercaptans, such as, for example, dodecylmercaptan ("n-DDM"). The chain transfer agent may be used at from 0.1% to 10% based on the total weight of the polymeric composition.

The invention also provides a method of reducing the swelling of wood in the presence of water, comprising the step of treating or coating the wood with a composition comprising one or more polymers comprising, as polymerized units,

i) 55-99.9% by weight of the total polymer of one or more (meth) acrylic acid ester monomers having the formula:

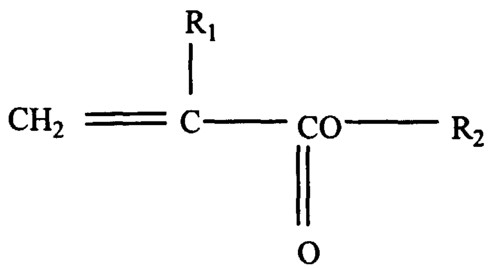

(I)

wherein $R_1$ = hydrogen or a methyl group; and $R_2$ = an alkyl or alkenyl group containing at least 12 carbon atoms, and

ii) 0.1-45% by weight of the total polymer of one or more monomers copolymerizable with (I).

It has surprisingly been found that wood treated with polymers formed of polymerised units of at least 55% by weight of the total polymer content of one or more (meth)acrylic acid esters shows a dramatic increase in the weather resistance as compared with untreated wood.

Furthermore, contrary to the teachings of the prior art, it has been found that the compositions of the present invention are highly effective at very low polymer retention levels; for example, from 0.1 to 4% polymer by weight of the

wood substrate, preferably from 1-3% polymer and particularly preferably from 1-2% by weight of the wood substrate.

Advantageously, the compositions of the present invention may also contain one or more of the following: surfactants (typically in an amount of 0.1-1.0%), co-solvents (typically in an amount of 0.1-1.0%), dispersants (typically in an amount of 0.1-1.0%), defoamers (typically in an amount of 10-1000ppm), corrosion inhibitors (typically in an amount of 100-1000ppm), wax (typically in an amount of 0.1-1.0%) and biocides. The percentages given above refer to weight percent of the ingredient on wood. In the case of biocidal compounds, these are typically added in amounts of 0.02 - 1.0% preferably 0.1 - 1.0% by weight on wood, and are added to protect wood from rotting and fungal attack. Preferred biocides include 3-isothiazolones of the formula:

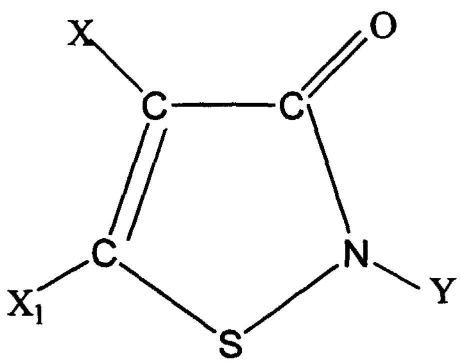

wherein Y is a ($C_1$-$C_{18}$) alkyl or ($C_3$-$C_{12}$), preferably ($C_5$-$C_8$), cycloalkyl each optionally substituted with one or more of hydroxy, halo, cyano,alkylamino, dialkylamino, arylamino, carboxy, carbalkoxy, alkoxy, aryloxy, alkylthio, haloalkoxy, cycloalkylamino, carbamoxy or osothiazolonyl; an unsubstituted or halo-substituted ($C_2$-$C_8$), preferably ($C_2$-$C_4$) alkenyl or alkynyl; a ($C_7$-$C_{10}$) aralkyl optionally substituted with one or more of halogen, ($C_1$-$C_4$) alkyl or ($C_1$-$C_4$) alkoxy; or an aryl substituted with one or more of halogen, nitro, ($C_1$-$C_4$) alkyl, ($C_1$-$C_4$) alkyl-acylamino, carb($C_1$-$C_4$) alkoxy or sulfamyl; and X and $X_1$ are each independently hydrogen, chloro or methyl groups. Particularly preferred are 4,5-dichloro-2-n-octyl-4-isothiazolin-3-one and 2-n-octyl-4-isothiazolin-3-one. Other biocides include: methylenebisthiocyanate (MBT); 2,2-dibromo-3-nitrilopropionamide (DBNPA); bromochlorodimethylhydantoin; glutaraldehyde; hypohalous acids, such as hypobromous acid, hypochlorous acid and hypochlorite; 1,4-bis(bromoacetoxy)-2-butene; 4,5-dichloro-1,1-dithiacyclopentene- 3-one; 2-bromo-2-nitropropane- 1,3-diol; propiconozole, cyproconazole; tebuconazole; chlorothalonil and quaternary ammonium based compounds.

Biocides are usually applied to wood by impregnating them into the wood or applying them as part of a coating composition. In addition, they may be applied as part of the composition of the present invention.

For environmental and cost reasons, biocides are used in the minimum amount, however, it is well known that under normal weathering conditions they leach quickly from wood, therefore, it is necessary to employ formulation components, for example polymers, to ensure that the duration of protection afforded by the biocide is cost effective. Surprisingly, it has been found that the compositions of the present invention dramatically retard this leaching.

Therefore, the present invention also provides a method of reducing the rate of leaching of one or more biocides from wood, comprising treating the wood with one or more biocides either prior to or concurrently with treating the wood with a composition comprising:
one or more polymers comprising, as polymerized units,

i) 55-99.9% by weight of the total polymer content of one or more (meth) acrylic acid ester monomers having the formula:

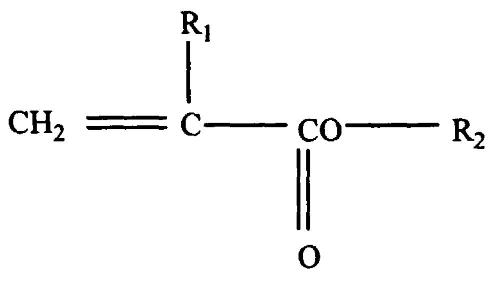

(I)

wherein $R_1$ = hydrogen or a methyl group; and $R_2$ = an alkyl or alkenyl group containing at least 12 carbon atoms.
ii) 0.1-45% by weight of the total polymer content of one or more monomers copolymerizable with (I);

The anti-swelling and anti-leaching benefits can be obtained by treating wood with the compositions of the present invention using any suitable method, such as spraying, dipping, painting and penetrating the compositions into the wood by pressure treating the wood or using double vacuum techniques. The compositions may be applied to wood by the consumer of a wood product, however, preferably wood is treated with the compositions before it is sold to the consumer.

The polymers may be prepared by solution polymerisation, emulsion polymerisation and suspension polymerisation. Suitable methods are taught in, for example, U.S. Patent 4,268,641, U.S. Patent 4,734,205 and US 5,521,266 which are incorporated herein by reference.

The present invention will now be described by way of example with reference to the following Examples.

Figure 1 shows a graph of %WEE against the percentage by weight of the polymer of stearyl methacrylate monomers; and
Figure 2 shows a graph of % swell against percentage weight of the polymer of stearyl methacrylate monomers.

The general procedure for preparing the polymers used in this invention is as follows: for stage 1, 400 g deionized water, Triton® XN-45S (Trademark of Union Carbide Chemical Company) anionic surfactant, and 28.6 g methyl-β-cyclodextrin (CD) are introduced into a 4-liter round bottom flask with four necks equipped with a mechanical stirrer, temperature control device, condenser, monomer and initiator feed lines, and a nitrogen inlet at room temperature. The contents are heated to 85°C while stirred under a nitrogen purge. A monomer emulsion is prepared separately. Solutions of 0.35% by weight sodium carbonate (based on the total monomer weight in stage 1 and stage 2) in 25 g deionized water and 0.35% by weight sodium persulfate (based on the total monomer weight in stage 1 and stage 2) in 30 g deionized water are introduced into the reaction kettle. The monomer emulsion is fed over a period of 20 minutes together with an initiator solution of 0.05% sodium persulfate (based on the total monomer weight in stage 1 and stage 2) in 210 g deionized water.

For stage 2, a second monomer emulsion is prepared using 625 g deionized water, 7.8 g Triton® XN-45S anionic surfactant, and monomers. Immediately after the end of the stage 1 monomer emulsion feed, the stage 2 monomer emulsion is fed over a period of 3 hours together with the sodium persulfate initiator solution. The monomers of the first and second monomer emulsions are selected such that the experimental polymers 6 - 11 of Table 1 (based on weight percent monomer) are obtained.

(A) Water Swelling Tests

The following method was used to treat wood wafers with various polymer containing compositions to determine the anti wood-swelling effectiveness of these compositions. The polymer retention loading was 0.75 Ibs/ft$^3$ (12 Kg/M$^3$) which equates to 2.4% by weight of the wood sample, and was achieved by using a 2.2 % polymer solids solution during the impregnation treatment of the wood wafers.

The polymers as detailed in Table 1 were prepared and diluted to 2.2% polymer solids concentration by dissolving in either water or a xylene/toluene (48/52 ratio) mix to make a composition for treating southern yellow pine wood wafers (size: 0.64 x 3.8 x 14cm (0.25 X 1.5 X 5.5 inches). The choice of solvent was dependant upon the solubility of the particular polymer, however, as shown in Table 2, neither water nor the xylene/toluene mix have any effect on the results. The polymer containing compositions were impregnated into the wood wafers by vacuum at 29 psig negative pressure followed by soaking at atmospheric pressure. The solution uptake for each of the treated wafers was recorded and the treated wafers were allowed to air dry under an exhaust hood for 1 week followed by conditioning in an oven at 38°C (100 °F) for 24 hours or more until a constant weight for the wood wafer is obtained; this being a measure of uniform moisture content. After heat conditioning, the treated wafers were weighed and placed in a desiccator. Untreated control wafers were impregnated with a solvent (water or toluene/xylene mixture) and were also heat conditioned, weighed to constant weight and stored as described above.

The water swelling tests were conducted by first measuring the length of each of the treated and untreated wafers being tested; these treated and untreated wafers were then emersed in water and allowed to soak for either 5 or 30 minutes. The length of the treated and untreated wafers was then measured after soaking using a measuring gauge as specified in the AWPA test method E13-92 to determine by how much the wafers had swelled as a result of soaking in water.

Two important results can be determined from these tests:

1) % Swell: this is the percentage increase in length of the wafers (treated and untreated) after soaking in water for

either 5 or 30 minutes. The percentage swell results are calculated using an average of the swell results for three identical wafers.

This is calculated as follows:

$$\%Swell = \frac{\text{Increase Length of Wafer}}{\text{Original Length of Wafer)}} X\ 100$$

2) Water exclusion efficiency (%WEE). This indicates how much water is absorbed by the treated wafer versus the untreated wafer (control)

This is calculated:

$$\%WEE = \frac{\text{(\%Wt gained for untreated wafer - \%Wt gained for treated wafer)}}{\text{\%Wt gained for untreated wafer}} X100$$

Table 1

| **Polymer Composition** | | | | | | |
|---|---|---|---|---|---|---|
| **Polymer** | **Polymer Composition** | | | | | |
| | **SMA %wt** | **MMA %wt** | **BA %wt** | **Sty. %wt** | **MAA %wt** | **Surfactant** |
| **1** (comp.) | 20.0 | 79.0 | - | - | 1.0 | A |
| **2** (comp.) | 20.0 | 15.0 | 64.0 | - | 1.0 | A |
| **3** (comp.) | 50.0 | 49.0 | - | - | 1.0 | A |
| **4** (comp.) | 50.0 | 50.0 | - | - | - | - |
| **5** (comp.) | - | - | 50.0 | 49.0 | 1.0 | A |
| **6** (exp.) | 65.0 | 34.0 | - | - | 1.0 | A |
| **7** (exp.) | 80.0 | 19.0 | - | - | 1.0 | A |
| **8** (exp.) | 93.0 | 6 | - | - | 1.0 | A |
| **9** (exp.) | 93.0 | 5.0 | - | - | 2.0 | B |
| **10** (exp.) | 93.0 | 5.0 | - | - | 2.0 | A |
| **11** (exp.) | 93.0 | 5.0 | - | - | 2.0 | A |
| **12** (control) (water only) | - | - | - | - | - | - |
| **13** (control) (aromatic solvent[1] only) | - | - | - | - | - | - |

Key:
SMA = Stearyl methacrylic acid
MMA = Methyl methacrylate
BA = Butyl acrylate
Sty. = Styrene
MAA = Methacrylic acid
Surfactant A = anionic surfactant 0.74% Disponil FES-32 (lauryl(ethylene oxide)4) available from Henkel GmbH
Surfactant B = a mixture of non-ionic surfactant 1.5% Lipoconil L-23 (lauryl (ethylene oxide23)) available from Lipo Chemicals Inc. and anionic surfactant 0.74% Disponil FES-32.

[1] Aromatic solvent is: A mixture of 42 parts xylene and 58 parts toluene.

Table 2

| Water Repellency Performance of Polymers | | | |
|---|---|---|---|
| **Example** | **%WEE** | **%Swell 5 min. soak Mean value[2]/SD[3]** | **%Swell 30 min. soak Mean value[2]/SD[3]** |
| **1** | -5.68 | 5 .87/0.66 | 6 .10/0.6 7 |
| **2** | 34.08 | 374/1.11 | 6.60/0.73 |
| **3** | 18.42 | 4.7/0.81 | 5.91/0.64 |
| **4** | 46.8 | 2.64/0.57 | 5.53/0.54 |
| **5** | 29.09 | 4.02/0.44 | 5.78/0.43 |
| **6** | 32.64 | 2.56/1.22 | 5.84/0.51 |
| **7** | 40.06 | 1.57/0.54 | 5.35/0.19 |
| **8** | 74.4 | 0.32/0.04 | 1.95/0.72 |
| **9** | 59.89 | 0.79/0.41 | 3.53/0.68 |
| **10** | 71.68 | 0.45/0.17 | 2.34/0.84 |
| **11** | 63.62 | 0.49/0.22 | 3.59/0.46 |
| **12** | 0 | 6.03/0.96 | 6.12/0.98 |
| **13** | 16.9 | 5.11/0.88 | 6.23/0.75 |

[2] Mean value of the results obtained from three test wafers.
[3] SD = standard deviation.

From the results presented above, it is apparent that as the percentage by weight of stearyl acrylate monomer increases, the % WEE of the treated wood increases and % Swell of the treated wood decreases. The extremely surprising feature of the results is the dramatic increase in % WEE and decrease in % Swell which is observed when the percentage weight of stearyl methacrylate is 55%/wt or above. This is even more clearly demonstrated when the above results are presented in the form of a graph, Figures 1 and 2.

<u>(B) Reduction in the Rate of Biocide Leaching From Wood.</u>

Table 3 below details the polymer compositions tested in accordance with AWPA Standard E11-87. Test wood blocks (size: 1.9 cm x 1.9 cm x 1.9 cm = 6.9 $cm^3$) were prepared from southern yellow pine sapwood. The blocks were conditioned for about 24 hours at room temperature at around 23°C and relative humidity of around 50% before treatment with a preservative solution. Testing was conducted as follows: A group of eight blocks per biocide treatment were initially pre-weighed and then treated with preservatives using a vacuum (100mm Hg) impregnation process in which the treatment solution was introduced into the wood matrix under vacuum for 20 minutes and then at atmospheric pressure for 30 minutes to complete the process. The blocks were then weighed to determine the actual retention levels in the wood blocks, and then allowed to dry for one week before the leaching test is initiated. Six of the treated blocks were subjected to a leaching test by first submerging in 300g of deionized water and shaking, whilst submerged, using a mechanical shaker to accelerate biocide active ingredient (a.i.) leach out. At each of the time intervals 5, 24, 144, and 1014 hours the leachate was removed and replaced with fresh deionized water for the next time interval. Each leachate was analyzed for a.i. using high pressure liquid chromatography (HPLC). Using this leach out method, the compositions detailed in Table 3 were diluted in their respective solvent (mineral spirit for Eg. I, xylene Eg. II and water for Egs. III through VII) to a 0.1% a.i. concentration of treatment solution. Compositions of Egs. IV through VII contain acrylic polymers at a concentration of around 3.3% polymer solids. The remaining two blocks were used as a reference of the amount of initial active ingredient in each group of blocks.

The leachate analysis results obtained are detailed in Table 4.

TABLE -3

| Example | Compositions (all values in % by Weight) |
|---|---|
| **(I)** (control) | 30 isothiazolone[4] + 70 Mineral Spirit oil |
| **(II)** (comparison) | 30 isothiazolone[4] + 70 Xylene |
| **(III)** (comparison) | 20 isothiazolone[4] + 50 P9oil®[5] + 30 surfactant C |
| **(IV)** (experimental) | 94(93SMA/5MMA/2MAA) + 6(20 isothiazolone[4] + 50 P9oil®[5] + 30 surfactant C) |
| **(V)** (experimental) | 95(93SMA/5MMA/2MMA) + 0.05 surfactant C +1.5 isothiazolone[4]+ 3.45 P9oil®[5] |
| **(VI)** (experimental) | 47(46SMA/47LMA/5MMA) + 46 water + 0.05 surfactant C + 1.5 isothiazolone[4] + 3.45 P9oil®[5] |
| **(VII)** (experimental) | 47(63SMA/32MMA/2MIMAM/1MMA) +46 water + 0.05 surfactant C + 1.5 isothiazolone[4] + 3.45 P9oil®[5] |

Key:
[4]Isothiazolone: 4,5-dichloro-2-n-4-isothiazolin-3-one.
[5]P9oil®: A petroleum oil supplied by Golden Bear Oil Specialities.
Surfactant C: 1:1 ratio blend of Nopcocastor ®70% and Aerosol® OT 100 (both are anionic surfactants).
Nopcocastor® 70% is a sulphated castor oil made by Henkel Corporation, and
Aerosol® OT 100 is a 100% dioctyl sodium sulphosuccinate made by Cyntec Ind., Inc.

Table 4

| Isothiazolone Aqueous Leach Study Conducted In Accordance with AWPA E12-87. | | | | | | | | | | | | | |
|---|---|---|---|---|---|---|---|---|---|---|---|---|---|
| **Example** | **Amount of Isothiazolone Leached over Time (µg/ml)** | | | | | | | | | | | | |
| | **5hr** | **24 hr** | **74 hr** | **144 hr** | **193 hr** | **240 hr** | **312 hr** | **360 hr** | **408 hr** | **486 hr** | **558 hr** | **726 hr** | **1014 hr** |
| **(I)** | 1.38 | 1.40 | 1.20 | 1.24 | 1.14 | 1.00 | 1.03 | 0.94 | 0.80 | 0.79 | 0.71 | 0.84 | 0.80 |
| **(II)** | 1.40 | 1.34 | 1.37 | 0.94 | 0.88 | 1.12 | 1.11 | 0.97 | - | - | - | - | - |
| **(III)** | 1.09 | 1.08 | 1.16 | 1.13 | 1.08 | 0.97 | 1.03 | 0.95 | 0.78 | 0.80 | 0.75 | 0.89 | 0.84 |
| **(IV)** | 0.70 | 0.74 | 0.78 | 0.54 | 0.52 | 0.70 | 0.67 | 0.59 | - | - | - | - | - |
| **(V)** | 0.56 | 0.74 | 0.74 | 0.71 | 0.70 | 0.64 | 0.65 | 0.65 | 0.55 | 0.54 | 0.52 | 0.58 | 0.58 |
| **(VI)** | 0.61 | 0.74 | 0.69 | 0.68 | 0.67 | 0.64 | 0.65 | 0.64 | 0.54 | 0.56 | 0.52 | 0.59 | 0.56 |
| **(VII)** | 0.53 | 0.67 | 0.68 | 0.69 | 0.64 | 0.62 | 0.65 | 0.63 | 0.52 | 0.54 | 0.50 | 0.57 | 0.57 |

The results in Table 4 show that samples IV, V, VI and VII, all of which contain polymers comprising, as polymerised units, at least 55% by weight of the polymer of one or more (meth)acrylic acid ester monomers having formula (I), give a significant reduction rate of leaching of the biocide 4,5-dichloro-2-n-octyl-3-isothiazolone as compared with the comparative samples I, II and III which do not contain such polymers.

Table 5 below indicates the percentage of a.i. leached out per day. This is calculated as follows:

$$\%\text{a.i. Leach rate/day} = \frac{\text{Total a.i. Leach Out}}{\text{Total a.i. Initial}} \times 100 \times \frac{1}{\text{1014Hrs}} \times \frac{\text{24 Hrs}}{\text{Day}}$$

TABLE -5

| Example | % a.i. Leach Out/day |
|---|---|
| (I) | 0.443 |
| (II) | --(no initial a.i. data) |
| (III) | 0.334 |
| (IV) | --(no initial a.i. data) |
| (V) | 0.237 |
| (VI) | 0.234 |
| (VII) | 0.190 |

**Claims**

**1.** Composition for reducing the swelling of wood in the presence of water, comprising: one or more polymers comprising, as polymerized units,

i) 55-99.9% by weight of the total polymer of one or more (meth) acrylic acid ester monomers having the formula:

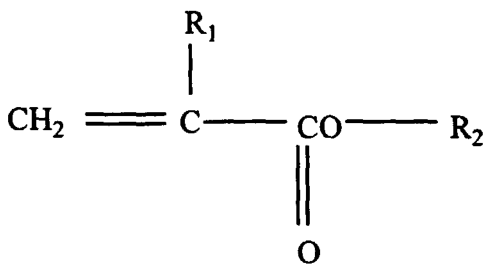

(I)

wherein $R_1$ is selected from hydrogen and a methyl group; and $R_2$ is selected from an alkyl and alkenyl group containing at least 12 carbon atoms, and
ii) 0.1-45% by weight of the total polymer of one or more monomers copolymerizable with (I).

**2.** Composition according to claim 1 wherein the polymer comprises as polymerized units,

i) 80-99.9% by weight of the total polymer of one or more alkyl esters of (meth)acrylic acid having the formula:

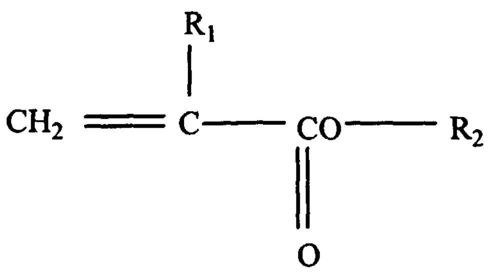

(I)

wherein $R_1$ = hydrogen or a methyl group; and $R_2$ = an alkyl or alkenyl group containing at least 12 carbon atoms, and
ii) 0.1-20% by weight of the total polymer of one or more monomer copolymerizable with (I).

**3.** Composition according to claim 1 or 2 wherein $R_2$ is an ($C_{12}$ - $C_{30}$) alkyl group.

**4.** Composition according to claim 1 or 2 wherein the copolymerisable monomers include one or more selected from alkyl (meth)acrylate; styrene; vinyl acetate, vinyl chloride, vinylidene chloride, N-vinyl prrolidone; acrylonitrile or methacrylonitrile

**5.** Composition according to claims 1 or 2 further comprising an effective amount of a biocide.

**6.** Method of reducing the swelling of wood in the presence of water, comprising the step of treating or coating the wood with a composition comprising one or more polymers comprising, as polymerized units,

i) 55-99.9% by weight of the total polymer of one or more (meth) acrylic acid ester monomers having the formula:

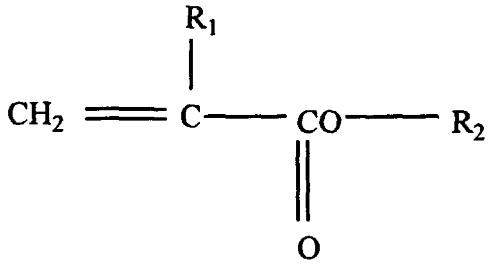

(I)

wherein $R_1$ = hydrogen or a methyl group; and $R_2$ = an alkyl or alkenyl group containing at least 12 carbon atoms, and
ii) 0.1-45% by weight of the total polymer of one or more monomers copolymerizable with (I).

**7.** Method of reducing the rate of leaching of one or more biocides from wood, comprising treating the wood with one or more biocides either prior to or concurrently with treating the wood with a composition comprising:
one or more polymers comprising, as polymerized units,

i) 55-99.9% by weight of the total polymer content of one or more (meth) acrylic acid ester monomers having the formula:

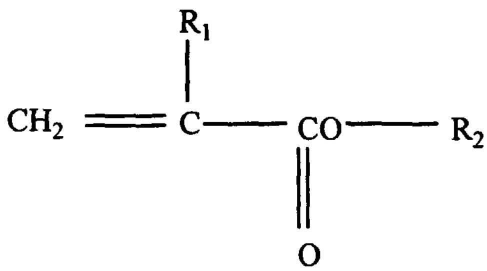

(I)

wherein $R_1$ = hydrogen or a methyl group; and $R_2$ = an alkyl or alkenyl group containing at least 12 carbon atoms; and
ii) 0.1-45% by weight of the total polymer content of one or more monomers copolymerizable with (I);